(19) **Europäisches Patentamt / European Patent Office / Office européen des brevets**

(11) **EP 4 645 994 A1**

(12) **EUROPEAN PATENT APPLICATION**
published in accordance with Art. 153(4) EPC

(43) Date of publication:
05.11.2025 Bulletin 2025/45

(21) Application number: 23918973.1

(22) Date of filing: 30.01.2023

(51) International Patent Classification (IPC):
$H04W\ 72/21^{(2023.01)}$ $H04B\ 7/185^{(2006.01)}$

(52) Cooperative Patent Classification (CPC):
H04B 7/185; H04W 72/21

(86) International application number:
PCT/CN2023/073909

(87) International publication number:
WO 2024/159383 (08.08.2024 Gazette 2024/32)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Huawei Technologies Co., Ltd.
Shenzhen, Guangdong 518129 (CN)

(72) Inventors:
• ZHOU, Mingyue
Shenzhen, Guangdong 518129 (CN)

• PAOLINI, Enrico
47522 Cesena (FC) (IT)
• WANG, Lei
Shenzhen, Guangdong 518129 (CN)
• CHIANI, Marco
47522 Cesena (FC) (IT)
• VALENTINI, Lorenzo
47522 Cesena (FC) (IT)
• XU, Xiuqiang
Shenzhen, Guangdong 518129 (CN)

(74) Representative: Pfenning, Meinig & Partner mbB
Patent- und Rechtsanwälte
Theresienhöhe 11a
80339 München (DE)

(54) **COMMUNICATION METHOD AND APPARATUS**

(57) This application provides a communication method and apparatus. The method includes: obtaining ephemeris information, determining a repetition pattern based on the ephemeris information and a first correspondence, and performing uplink transmission based on the repetition pattern. Therefore, a terminal apparatus may determine the repetition pattern based on the ephemeris information and the first correspondence, so that invalidation of a preconfigured dynamic grant free uplink transmission configuration can be avoided, performance of dynamic grant free uplink transmission in a non-terrestrial network can be improved, and a configuration frequency does not need to be increased.

S101: Obtain ephemeris information

S102: Determine a repetition pattern based on the ephemeris information and a first correspondence

S103: Perform uplink transmission based on the repetition pattern

FIG. 5A

EP 4 645 994 A1

**Description**

TECHNICAL FIELD

This application relates to the field of mobile communication technologies, and in particular, to a communication method and apparatus.

BACKGROUND

Non-terrestrial networks (non-terrestrial networks, NTNs) are an important part of 5th generation (5th generation, 5G) and future wireless communication networks, and are defined as networks or network segments that use a transmission device such as an airborne or spaceborne spacecraft as a relay node or a base station. Compared with a conventional terrestrial network, a major characteristic of the non-terrestrial network is that a base station is deployed in the air or space, or the base station performs signal transmission with a terminal device through a non-terrestrial device in the air or space.

The non-terrestrial network has communication characteristics of wide coverage, a long distance, and a high latency. It is difficult to meet a latency requirement of a service in a scheduling or dynamic grant based service transmission manner. Therefore, dynamic grant free (grant free, GF) transmission is one of conventional transmission schemes used by non-terrestrial networks in the future to reduce a transmission latency. In GF transmission, the terminal apparatus may send same information for a plurality of times in a repetition (repetition) manner, to improve transmission reliability.

Currently, repetition pattern information in the non-terrestrial network is mainly configured by a network device for a terminal device by using radio resource control (ratio resource control, RRC) signaling. A repetition pattern may indicate information such as an interval between any two repetitions in a plurality of repetitions. However, because a non-terrestrial device in the non-terrestrial network moves at a high speed, and a transmission distance between the terminal device and the non-terrestrial device is long, it is difficult for the preconfigured repetition pattern to be valid for a long time, and consequently GF transmission performance deteriorates.

SUMMARY

This application provides a communication method and apparatus, to improve GF transmission performance in a non-terrestrial network.

According to a first aspect, this application provides a communication method, applied to a non-terrestrial network communication system. The method may be implemented by a terminal apparatus. The terminal apparatus may be a terminal device or a component in a terminal device. The component in this application may include, for example, at least one of a chip, a chip system, a processor, a transceiver, a processing unit, or a transceiver unit. Using an example in which the execution body is the terminal apparatus, the method may be implemented through the following steps: The terminal apparatus obtains ephemeris information, and the terminal apparatus may further determine a repetition pattern based on the ephemeris information and a first correspondence, and perform uplink transmission based on the repetition pattern.

Based on the method shown in the first aspect, the terminal apparatus may determine the repetition pattern based on the ephemeris information and the first correspondence, that is, determine a configuration used for dynamic grant free uplink transmission. Therefore, invalidation of a preconfigured repetition pattern can be avoided, and a network device does not need to increase a configuration frequency, so that performance of dynamic grant free uplink transmission in a non-terrestrial network can be improved.

In a possible implementation, the terminal apparatus may determine non-terrestrial device information based on the ephemeris information, where the non-terrestrial device information includes distance information and/or moment information, the distance information indicates a distance between a terminal performing uplink transmission and a non-terrestrial device, the moment information is determined based on uplink transmission moment information and reference moment information, and the reference moment information is included in the ephemeris information; and the terminal apparatus may further determine the repetition pattern based on the non-terrestrial device information and the first correspondence.

Based on this implementation, the terminal apparatus may determine the distance information and/or the moment information based on the ephemeris information, and determine the repetition pattern based on the distance information and/or the moment information and the first correspondence, to flexibly determine the repetition pattern.

In a possible implementation, the non-terrestrial device information includes the distance information, and the terminal apparatus may query the first correspondence based on the distance information, to determine the repetition pattern.

Based on this implementation, the first correspondence may include a correspondence between the distance information and the repetition pattern. Optionally, for different distance information, the repetition pattern determined based on the first correspondence may be different, to adapt to dynamic grant free transmission requirements at different distances.

In a possible implementation, the first correspondence is queried based on first distance information to determine a first repetition pattern, and the first correspondence is queried based on second distance information to determine a second repetition pattern, where a distance indicated by the first distance information is greater than a distance indicated by the second distance information, and a largest interval between adjacent repetition occasions that is indicated by the first repetition pattern is greater than a largest interval between adjacent repetition occasions that is indicated by the second repetition pattern.

Based on this implementation, when the distance indicated by the distance information is relatively large, a repetition pattern with a relatively large largest interval may be used, to offset a feedback delay caused by the relatively large distance, thereby improving transmission efficiency.

In a possible implementation, when the non-terrestrial device information includes the first distance information, uplink transmission is performed based on the first repetition pattern; and when the non-terrestrial device information includes the second distance information, uplink transmission is performed based on the second repetition pattern.

In a possible implementation, the non-terrestrial device information includes the moment information, and the terminal apparatus may query the first correspondence based on serving beam information and the moment information, to determine the repetition pattern.

Based on this implementation, the first correspondence may include a correspondence between the beam information, the moment information, and the repetition pattern. Optionally, for same beam information and different moment information, the repetition pattern determined based on the first correspondence may be different, to adapt to dynamic grant free transmission requirements in different beam and moment information.

In a possible implementation, the terminal apparatus may further query the first correspondence based on first serving beam information and first moment information to determine a third repetition pattern, and query the first correspondence based on the first serving beam information and second moment information to determine a fourth repetition pattern, where a moment value corresponding to the first moment information is greater than a moment value corresponding to the second moment information, and a largest interval between adjacent repetition occasions that is indicated by the third repetition pattern is greater than a largest interval between adjacent repetition occasions that is indicated by the fourth repetition pattern.

Based on this implementation, for same beam information, when the moment value corresponding to the moment information is relatively large, a repetition pattern with a relatively large largest interval may be used, to offset a feedback delay caused by the relatively large transmission latency, thereby improving transmission efficiency.

In a possible implementation, the terminal apparatus may further receive the first correspondence from a network device.

Based on this implementation, the first correspondence may be configured by the network device for the terminal apparatus. The network device may include a non-terrestrial device or a terrestrial station, to implement flexible configuration.

Based on this implementation, the repetition pattern can be flexibly set. Optionally, the repetition pattern may include transmission parameters in dynamic grant free transmission scenarios such as dynamic grant free uplink transmission in a random access process, dynamic grant free direct data transmission, and/or small packet transmission, to adapt to a plurality of communication scenarios.

In a possible implementation, the repetition pattern indicates repetition occasions at unequal intervals.

According to a second aspect, a communication apparatus is provided. The apparatus may implement the method in any one of the first aspect and the possible implementations of the first aspect.

In an optional implementation, the apparatus may include one-to-one corresponding modules that perform the methods/operations/steps/actions described in any one of the first aspect and the possible implementations of the first aspect. The module may be a hardware circuit, or software, or may be implemented by a hardware circuit in combination with software. In an optional implementation, the apparatus includes a processing unit (also referred to as a processing module sometimes) and a communication unit (also referred to as a communication module, a transceiver module, or a transceiver unit sometimes). The communication unit can implement a sending function and a receiving function. When the communication unit implements the sending function, the communication unit may be referred to as a sending unit (also referred to as a sending module sometimes). When the communication unit implements the receiving function, the communication unit may be referred to as a receiving unit (also referred to as a receiving module sometimes). The sending unit and the receiving unit may be a same functional module, and the functional module can implement the sending function and the receiving function. Alternatively, the sending unit and the receiving unit may be different functional modules, and the transceiver unit is a general term of these functional modules.

For example, when implementing the method shown in the first aspect, the apparatus may include a processing unit and a communication unit. The processing unit may be configured to: obtain ephemeris information, and determine a repetition pattern based on the ephemeris information and a first correspondence. The communication unit may be configured to perform uplink transmission based on the uplink configuration information.

In a possible implementation, the processing unit may be specifically configured to: determine non-terrestrial device information based on the ephemeris information, where the non-terrestrial device information includes distance information and/or moment information, the distance information indicates a distance between a terminal performing uplink transmission and a non-terrestrial device, the moment information is determined based on uplink transmission moment information and reference moment information, and the reference moment information is included in the ephemeris information; and determine the repetition pattern based on the non-terrestrial device information and the first correspondence.

In a possible implementation, the non-terrestrial device information includes the distance information, and the processing unit may be specifically configured to query the first correspondence based on the distance information, to determine the repetition pattern.

In a possible implementation, the processing unit may be specifically configured to: query the first correspondence based on first distance information to determine a first repetition pattern, and query the first correspondence based on second distance information to determine a second repetition pattern, where a distance indicated by the first distance information is greater than a distance indicated by the second distance information, and a largest interval between adjacent repetition occasions that is indicated by the first repetition pattern is greater than a largest interval between adjacent repetition occasions that is indicated by the second repetition pattern.

In a possible implementation, when the non-terrestrial device information includes the first distance information, the communication unit may be specifically configured to perform uplink transmission based on the first repetition pattern; and when the non-terrestrial device information includes the second distance information, the communication unit may be specifically configured to perform uplink transmission based on the second repetition pattern.

In a possible implementation, the non-terrestrial device information includes the moment information, and the processing unit may be specifically configured to query the first correspondence based on the serving beam information and the moment information, to determine the repetition pattern.

In a possible implementation, the processing unit may be specifically configured to: query the first correspondence based on first serving beam information and first moment information to determine a third repetition pattern, and query the first correspondence based on the first serving beam information and second moment information to determine a fourth repetition pattern, where a moment value corresponding to the first moment information is greater than a moment value corresponding to the second moment information, and a largest interval between adjacent repetition occasions that is indicated by the third repetition pattern is greater than a largest interval between adjacent repetition occasions that is indicated by the fourth repetition pattern.

In a possible implementation, the communication unit may be further configured to receive the first correspondence from a network device.

In a possible implementation, the repetition pattern indicates repetition occasions at unequal intervals.

For another example, the apparatus includes a processor, coupled to a memory, and configured to execute instructions in the memory, to implement the method in any one of the first aspect and the possible implementations of the first aspect. Optionally, the apparatus further includes other components, for example, an antenna, an input/output module, a transceiver, and a communication interface. These components may be hardware, software, or a combination of software and hardware.

According to a third aspect, a computer-readable storage medium is provided. The computer-readable storage medium is configured to store a computer program or instruction, and when the computer program or instruction is run, the method according to any one of the possible implementations of the first aspect is implemented.

According to a fourth aspect, a computer program product including instructions is provided. When the computer program product is run on a computer, the method according to any one of the possible implementations of the first aspect is implemented.

According to a fifth aspect, a chip system is provided. The chip system includes a logic circuit (or it may be understood as that the chip system includes a processor, and the processor may include a logic circuit and the like), and may further include an input/output interface. The input/output interface may be configured to receive a message, or may be configured to send a message. The input/output interface may be a same interface, that is, the same interface can implement both a sending function and a receiving function. Alternatively, the input/output interface includes an input interface and an output interface. The input interface is configured to implement the receiving function, that is, configured to receive a message. The output interface is configured to implement the sending function, that is, configured to send a message. The logic circuit may be configured to perform an operation other than the sending and receiving functions in any one of the first aspect and the possible implementations of the first aspect. The logic circuit may be further configured to: transmit a message to the input/output interface, or receive, from the input/output interface, a message from another communication apparatus. The chip system may be configured to implement the method in any one of the possible implementations of the first aspect. The chip system may include a chip, or may include a chip and another discrete component.

Optionally, the chip system may further include a memory, and the memory may be configured to store instructions. The logic circuit may invoke the instructions stored in the memory to implement a corresponding function.

According to a sixth aspect, a communication system is provided. The communication system may include a terminal apparatus and a network device. The terminal apparatus may be configured to perform the method in any one of the first aspect and the possible implementations of the first aspect.

For technical effects achieved by the second aspect to the sixth aspect, refer to the descriptions in the first aspect. Details are not described herein again.

BRIEF DESCRIPTION OF DRAWINGS

FIG. 1 is a diagram of an architecture of a wireless communication system according to an embodiment of this application;

FIG. 2 is a diagram of an architecture of another wireless communication system according to an embodiment of this application;

FIG. 3 is a diagram of an architecture of a network device according to an embodiment of this application;

FIG. 4 is a diagram of a CG configuration process in an NTN;

FIG. 5A is a schematic flowchart of a communication method according to an embodiment of this application;

FIG. 5B is a diagram of a repetition pattern according to an embodiment of this application;

FIG. 6A is a diagram of spatial parameters of a satellite system;

FIG. 6B is a diagram of another repetition pattern according to an embodiment of this application;

FIG. 6C is a diagram of a scenario of determining a repetition pattern based on a distance according to an embodiment of this application;

FIG. 7A is a diagram of an RTT change trend in a satellite running process;

FIG. 7B is a diagram of a relationship between a satellite beam and a service area according to an embodiment of this application;

FIG. 8 is a diagram of a structure of a communication apparatus according to an embodiment of this application;

FIG. 9 is a diagram of a structure of another communication apparatus according to an embodiment of this application; and

FIG. 10 is a diagram of a structure of another communication apparatus according to an embodiment of this application.

DESCRIPTION OF EMBODIMENTS

The following further describes this application in detail with reference to the accompanying drawings.

Embodiments of this application provide a communication method and apparatus, to reduce a location verification latency and overheads of a terminal device. The method and the apparatus in this application are based on a same technical concept. Because problem-resolving principles of the method and the apparatus are similar, mutual reference may be made to implementation of the apparatus and the method, and repeated parts are not described.

In the description of this application, terms such as "first" and "second" are used only for purposes of distinguishing descriptions, and cannot be understood as indicating or implying relative importance, or as indicating or implying a sequence.

In the description of this application, "at least one (type)" means one or more (types), and "a plurality of (types)" means two or more (types). "At least one of the following" or a similar expression thereof means any combination of these items, including any combination of a single item or a plurality of items. For example, at least one of a, b, or c may indicate a, b, c, a and b, a and c, b and c, or a, b, and c, where a, b, and c may be singular or plural.

In the description of this application, "and/or" describes an association relationship between associated objects, and represents that three relationships may exist. For example, A and/or B may represent the following cases: Only A exists, both A and B exist, and only B exists, where A and B may be singular or plural. "/" indicates "or". For example, a/b indicates a or b.

To describe the technical solutions in embodiments of this application more clearly, the following describes a communication method and apparatus provided in embodiments of this application in detail with reference to the accompanying drawings.

The communication method provided in embodiments of this application may be applied to an NTN communication scenario. NTN communication may include networking by using a device such as an unmanned aerial vehicle, a high altitude platform station (high altitude platform station, HAPS), or a satellite, to provide services such as data transmission and voice communication for a terminal device. In addition, an NTN system may further include another aerial network device. This is not limited in this application.

Satellites may be classified into geostationary earth orbit (geostationary earth orbit, GEO) satellites, medium-earth orbit (medium-earth orbit, MEO) satellites, and low-earth orbit (low-earth orbit, LEO) satellites based on satellite altitudes, namely, orbital altitudes of the satellites. A GEO is a synchronous earth satellite orbit. Satellites running on the orbit are stationary relative to the ground. An orbital altitude of the GEO is generally 35786 kilometers (km). An LEO and an MEO are collectively referred to as non-geostationary orbits (non-geostationary orbit, NGSO). Satellites running on this type of orbits move at a high speed relative to the ground. An orbital altitude of the LEO is generally 160 km to 2000 km, and an orbital altitude of the MEO is generally 2000 km to 35786 km. For the NGSO, based on whether beams of a satellite move with the satellite, division into an earth moving cell (earth moving cell) and an earth fixed cell (earth fixed cell) may be further performed. For the earth moving cell, the cell moves relative to the ground, and a beam direction of the satellite moves with the satellite. For the earth fixed cell, the cell is fixed relative to the ground within a specific time, and an antenna of the satellite may use a beamforming capability of the antenna to fix the beam direction within a specific area of the ground within the specific time. Using an LEO satellite with an orbital altitude of 600 km as an example, a moving speed of the satellite reaches up to 7 kilometers per second (km/s) in this case. In a cell with a diameter of 100 km, a service time of the satellite is only several minutes.

Table 1-1 shows network parameters for LEO NTN communication.

Table 1-1

| LEO communication type / Parameter | Low-earth orbit satellite LEO-1 | Low-earth orbit satellite LEO-2 |
|---|---|---|
| Altitude (kilometer) | 600 | 1200 |
| Distance between UE and the satellite (kilometer) | 600 to 1933 | 1200 to 3600 |
| Round-trip time between the UE and the satellite (millisecond) | 4 to 12.88 | 8 to 20.87 |
| Free space loss between the UE and the satellite (decibel (dB)) | 177 to 187 | 183 to 193 |

It may be understood that, because the satellite orbit is relatively far away from the earth surface, a communication process between an earth surface terminal apparatus and a non-terrestrial device such as a satellite has characteristics such as a long distance and a high latency. Because of the long-distance characteristic, a path loss of NTN communication is relatively high. In this application, a path loss may be represented by a signal-to-noise ratio (signal-to-noise ratio, SNR) or a signal to interference plus noise ratio (signal to interference plus noise ratio, SINR).

In NTN communication, working modes of an NTN device may include a transparent (transparent) mode and a regenerative (regenerative) mode. Based on the working modes of the NTN device, an architecture of NTN communication may be classified into the following two types. One is a transparent forwarding architecture. In the architecture, the NTN device may be a relay (relay) or an amplifier, and may perform radio frequency filtering, amplification, and the like, to regenerate a physical layer signal. The NTN device may be responsible for layer 1 (L1) relay, and is configured to perform physical layer forwarding, and is invisible to a higher layer. The other is a regenerative architecture. In the architecture, the NTN device has a processing function of an access network device. For example, in the regenerative working mode, the satellite may be further classified into a regenerative satellite that does not have an inter-satellite link, that is, there is no inter-satellite link (inter-satellite link, ISL) between satellites; or a regenerative satellite that has an inter-satellite link, that is, there is an interface between satellites for direct data exchange, where the inter-satellite link is an Xn interface; or a regenerative satellite that has a distributed unit (distributed unit, DU) processing function of the access network device. In this scenario, the satellite is used as a DU.

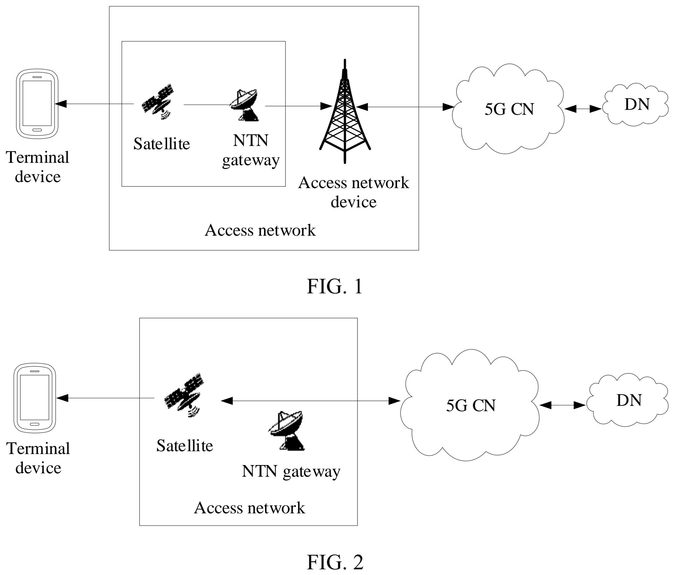

For example, FIG. 1 is a diagram of an NTN scenario to which an embodiment of this application is applicable. The NTN scenario may be an application scenario of a transparent forwarding architecture. In the scenario shown in FIG. 1, a terminal device may communicate with a 5G core network (core network, CN) by using an access network, and may be further connected to a data network (data network, DN) by using the 5G CN. A satellite and an NTN gateway (gateway) may be used as a relay device between the terminal device and the access network device or as a remote radio unit (remote radio unit, RRU) of the access network device.

For example, FIG. 2 is a diagram of another NTN scenario to which an embodiment of this application is applicable. The NTN scenario may be an application scenario of a regenerative architecture. In the scenario shown in FIG. 2, a satellite may be used as an access network device, form an access network with an NTN gateway, and communicate with a core network by using the NTN gateway. In addition, the satellite may further provide a wireless access service for the terminal apparatus. FIG. 2 shows an example of a regenerative satellite architecture without an inter-satellite link.

It should be noted that, FIG. 1 and FIG. 2 show only one satellite and one NTN gateway. In actual use, an architecture with a plurality of satellites and/or a plurality of NTN gateways may be used based on a requirement. Each satellite may provide a service for one or more terminal devices. Each NTN gateway may correspond to one or more satellites. Each satellite may correspond to one or more NTN gateways. This is not limited in embodiments of this application.

It should be noted that FIG. 1 and FIG. 2 are merely examples of the NTN scenario, and the NTN scenario may further include another specific scenario. This is not limited in this application.

Devices in embodiments of this application include a terminal device, an access network device, and a core network device.

The terminal device is also referred to as user equipment (user equipment, UE), a mobile station (mobile station, MS), a mobile terminal (mobile terminal, MT), or the like, and is a device that provides voice and/or data connectivity for a user. For example, the terminal device may be a hand-held device or a vehicle-mounted device that has a wireless connection function. Currently, some examples of the terminal device may be: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like.

The access network device may be a radio access network (radio access network, RAN) node (or device) that connects the terminal device to a wireless network, and may also be referred to as a base station. Currently, some examples of the RAN node may be: a next generation NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a base band unit (base band unit, BBU), a wireless fidelity (wireless fidelity, Wi-Fi) access point (access point, AP), and the like.

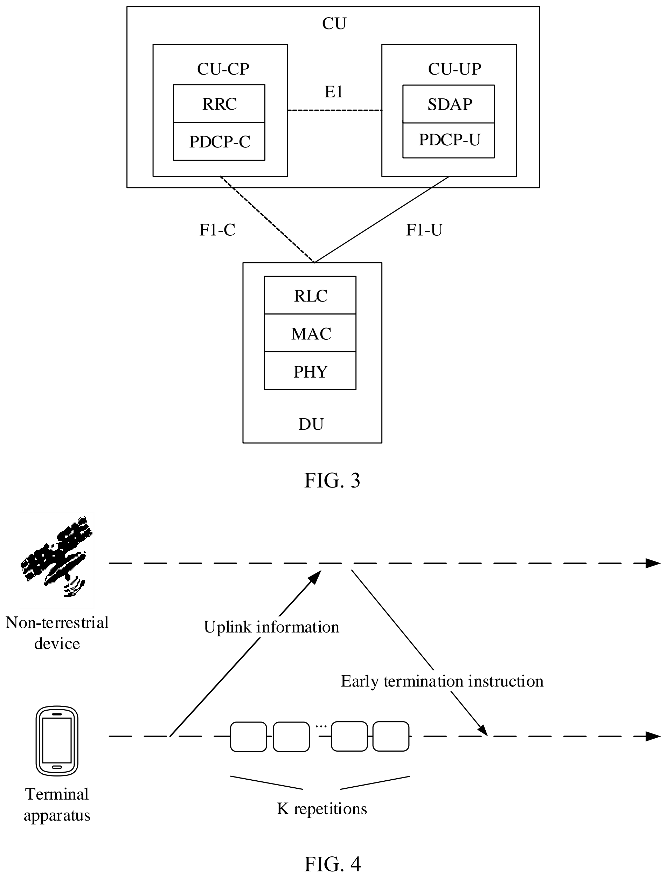

In addition, in a network structure, the access network device may include a central unit (central unit, CU) node, or a DU node, or a RAN device including a CU node and a DU node. The RAN device including the CU node and the DU node splits gNB protocol layers in an NR system, functions of some protocol layers are placed in the CU for central control, and functions of some or all of the remaining protocol layers are distributed in the DU, and the CU implements central control on the DU, as shown in FIG. 3. Further, the CU may be further divided into a control plane (CU-CP) and a user plane (CU-UP). The CU-CP is responsible for a control plane function, and mainly includes radio resource control (radio resource control, RRC) and a packet data convergence protocol (packet data convergence protocol, PDCP) that corresponds to a control plane (that is, a PDCP-C). The PDCP-C is mainly responsible for data encryption and decryption, integrity protection, data transmission, and the like of the control plane. The CU-UP is responsible for a user plane function, and mainly includes a service data adaptation protocol (service data adaptation protocol, SDAP) and a PDCP that corresponds to a user plane (that is, a PDCP-U). The SDAP is mainly responsible for processing data of a core network and mapping a flow (flow) to a bearer. The PDCP-U is mainly responsible for encryption and decryption, integrity protection, header compression, sequence number maintenance, data transmission, and the like of the user plane. The CU-CP and the CU-UP are connected through an E1 interface. The CU-CP, on behalf of the gNB, is connected to the core network through an NG interface and connected to the DU through an F1 interface control plane (namely, F1-C). The CU-UP is connected to the DU through an F1 interface user plane (namely, F1-U). Certainly, in another possible implementation, the PDCP-C is alternatively in the CU-UP.

It may be understood that in an NTN, the access network device may be deployed on a satellite or another non-terrestrial device, or may be deployed on the ground.

The core network device is a device in a core network that provides service support for the terminal device. Currently, some examples of the core network device are: an access and mobility management function (access and mobility management function, AMF) entity, a session management function (session management function, SMF) entity, a user plane function (user plane function, UPF) entity, and the like, which are not listed one by one herein. The AMF entity may be responsible for access management and mobility management of the terminal device. The SMF entity may be responsible for session management, for example, session establishment of a user. The UPF entity may be a function entity of the user plane, and is mainly responsible for connecting to an external network. It should be noted that, an entity in this application may also be referred to as a network element or a function entity. For example, the AMF entity may also be referred to as an AMF network element or an AMF function entity. For another example, the SMF entity may also be referred to as an SMF network element or an SMF function entity.

In this application, the NTN supports communication between the UE and the non-terrestrial device. The non-terrestrial device may be used as a spacecraft or a satellite that has a processing function of the access network device in the regenerative architecture, or may be used as a relay node or an amplifier that is deployed in the air or in the atmosphere and that has a processing function of the access network device in the transparent forwarding architecture. In the architecture shown in FIG. 1 or FIG. 2, the non-terrestrial device may include a satellite (or a spacecraft or the like). In the architecture shown in FIG. 1 or FIG. 2, the satellite, the NTN gateway, the access network device, the node in the 5G CN, and the node in the DN may be collectively referred to as a network device, and the NTN gateway and the access network device may be collectively referred to as a terrestrial station.

Because the non-terrestrial device is relatively far away from the ground (or the UE), a transmission latency between the non-terrestrial device and the UE is relatively large, and it is difficult for the access network device to schedule transmission of the UE in real time based on downlink control information (downlink control information, DCI). Therefore, in NTN communication, it is difficult for a dynamic grant based scheduling manner to meet a transmission latency requirement, and a dynamic grant free transmission manner becomes one of transmission schemes for reducing a transmission latency in NTN communication.

Dynamic grant free transmission may also be referred to as scheduling free transmission. One type of dynamic grant free transmission is to complete uplink data transmission in a random access process, for example, 2-step random access (2-step RA) introduced in 5G NR. Another type of dynamic grant free transmission is direct data transmission, including, for example, semi-persistent scheduling (semi-persistent scheduling, SPS) in LTE and transmission based on a preconfigured uplink resource (preconfigured uplink resource, PUR), and configured grant (configured grant, CG) transmission in 5G NR. A common characteristic of the two types of GF transmission is that before uplink transmission, the terminal device does not need to obtain, by monitoring a dynamic grant of the network device, a repetition pattern used for sending data, but performs repetition to the network device by using a preconfigured repetition pattern. The repetition pattern may indicate a time interval between any two repetitions in K repetitions of the terminal apparatus, and is usually configured by the network device by using higher layer signaling such as a system information (system information, SI) or terminal-specific (UE-specific) RRC signaling. For example, the RRC signaling may indicate a repetition pattern that may be used by the terminal apparatus, and the terminal apparatus uses the pattern in subsequent repetition.

In addition, a difference between the two types of GF transmission lies in that, in 2-step RA, the terminal device further needs to send a random access preamble (preamble) to the network device when sending data. In other words, the data of the terminal and the random access preamble are in a same uplink message, and a function of the random access preamble is to perform uplink synchronization between the terminal and a base station. However, in direct data transmission, the terminal device does not need to send a random access preamble to the network device. Therefore, direct data transmission is more applicable to a case in which uplink synchronization has been completed between the terminal device and the network device.

In addition, the 3rd Generation Partnership Project (3rd Generation Partnership Project, 3GPP) supports the terminal device in transmitting data, for example, small packet data, in an RRC idle state or an RRC inactive state. A corresponding transmission process may be referred to as small data transmission (small data transmission, SDT). GF transmission may include small packet transmission. In a scenario of small packet transmission, a data amount of a data packet that needs to be transmitted by the terminal device is usually quite small, and a quantity of bits of signaling that needs to be transmitted by the terminal device from the RRC idle state or the RRC inactive state to an RRC connected state is even greater than the data amount of small packet transmission. If the terminal device in the RRC idle state or the RRC inactive state is required to send the small packet data after entering the connected state, unnecessary power consumption and signaling overheads are caused. Therefore, if the terminal device is supported in directly transmitting the small packet data in the RRC idle state or the RRC inactive state, rather than transmitting the small packet data after entering the RRC connected state, signaling overheads and power consumption can be significantly reduced. For example, small packet transmission includes, for example, an instant message of an instant messaging application (application, APP), heartbeat packets or push messages of various APPs, service data of a non-smartphone, for example, accuracy data (such as a heartbeat packet) of a wearable device, periodic reading sent by an industrial wireless sensor network, or data of a device such as a smart meter.

Due to the large-latency characteristic of the NTN, GF transmission is greatly challenged, and it may be difficult to achieve an expected low-latency transmission objective. An early termination (early termination) mechanism in existing scheduling free transmission is used as an example. In a process of K repetitions of the terminal apparatus, if the network device has correctly demodulated uplink data or information when receiving the $(i<K)^{th}$ transmission, the network device sends an early termination instruction to the terminal apparatus, so that the terminal apparatus stops repetition from the

$(i+1)^{th}$ time to the $K^{th}$ time. However, the foregoing mechanism may fail in the NTN.

FIG. 4 is used as an example. If an overall time of triggering transmission for K times is quite short, a latency between the terminal apparatus and the non-terrestrial device may cause the terminal apparatus to end K transmissions before receiving the early termination instruction sent by the non-terrestrial device, causing a waste of GF transmission resources.

To improve communication performance of GF transmission in non-terrestrial network communication, this application provides a communication method and apparatus. The method and the apparatus are based on a same concept. Because problem-resolving principles of the method and the apparatus are similar, mutual reference may be made to implementation of the apparatus and the method, and repeated parts are not described. The communication method may be performed by a terminal apparatus and a non-terrestrial device (or a non-terrestrial apparatus). The terminal apparatus may be a terminal device or a component in a terminal device. The non-terrestrial device may be a device such as a spacecraft or a satellite. The non-terrestrial device may have a function of an access network device, or may perform only a function of transparent transmission. The non-terrestrial apparatus may be a component in the non-terrestrial device. The component in this application may be at least one of a chip, a chip system, a processor, a transceiver, a processing unit, or a transceiver unit. For example, for the terminal device, the component may include a wireless transceiver module, and for the access network device, the component may include a CU, a DU, or the like.

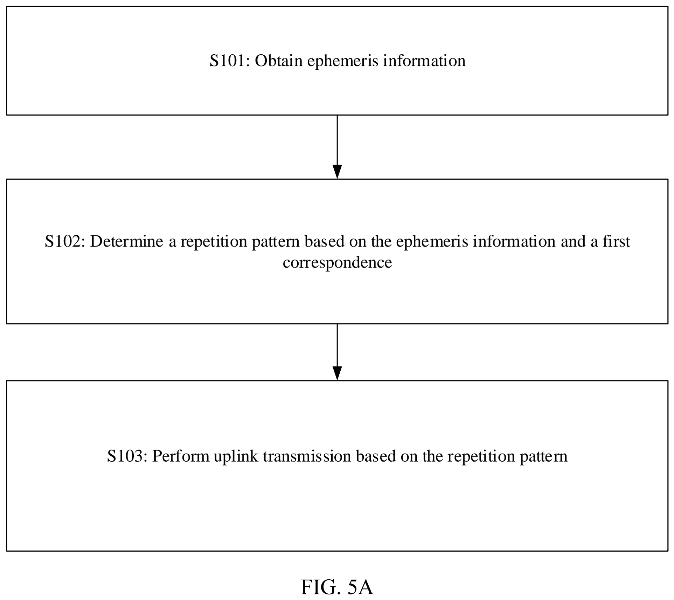

FIG. 5A is a schematic flowchart of a communication method according to this application. In the diagram, the method is described by using a terminal apparatus and a non-terrestrial apparatus as execution bodies. The method includes the following steps.

S101: The terminal apparatus obtains ephemeris information.

In S101, the terminal apparatus may receive the ephemeris information from the non-terrestrial device. In other words, the ephemeris information may be sent by the non-terrestrial device. In addition, when used as a chip or another component, the terminal apparatus may also receive ephemeris information from another component through a communication interface.

In this application, the ephemeris information may also be referred to as a satellite ephemeris (satellite ephemeris). The ephemeris information may be used to describe a location and a speed of spacecraft. The ephemeris information is generally in the format of a two-line orbital element (two-line orbital element, TLE). In the TLE data format, an orbital element list of earth orbital objects is encoded into two rows and 70 columns, and parameters such as time, coordinates, orientation, and a speed of the spacecraft are defined, achieving extremely high precision.

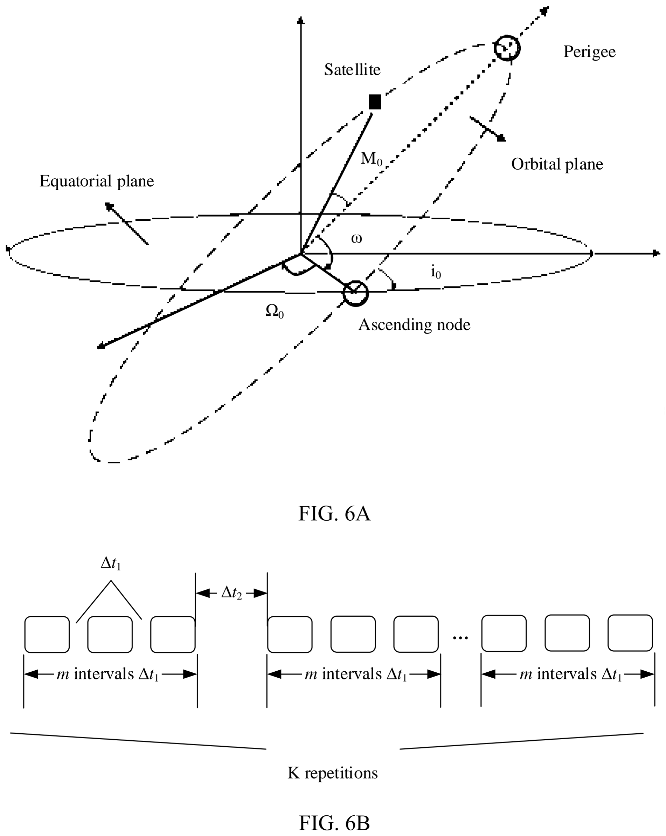

A satellite system shown in FIG. 6A is used as an example. If an ephemeris is described by using orbital parameters, a solvable ephemeris (or ephemeris information) includes seven parameters, as shown in Table 1-2.

Table 1-2

| Orbital plane parameters (orbital plane parameters) | $\sqrt{a}$ | Square root of a semi major axis (semi major axis/semi-major axis) |
|---|---|---|
| | e | Eccentricity (eccentricity) |
| | $i_0$ | Orbital inclination angle/inclination (inclination angle/inclination) at reference time |
| | $\Omega_0$ | Longitude (longitude) or right ascension (right ascension) of an orbital plane ascending node (ascending node) |
| | $\omega$ | Argument of perigee (argument of perigee) or argument of periapsis (argument of periapsis) |
| Satellite level parameters (satellite level parameters) | $M_0$ | Mean anomaly at reference time (mean anomaly at reference time/true anomaly and a reference point in time) |
| | $t_{0e}$ | Reference time, also referred to as ephemeris reference time (ephemeris reference time) or the epoch (the epoch) |

Based on the foregoing seven parameters, a coordinate location of the satellite at any moment t may be determined.

Using the mean anomaly as an example, the reference moment $t_{0e}$ and the reference location $M_0$ are used to determine the mean anomaly (mean anomaly) of the non-terrestrial device at the moment t, where the mean anomaly may be represented as M(t). For example, M(t) satisfies $M(t) = M_0 + n(t - t_{0e})$. M(t) may be used to calculate celestial coordinates of the satellite.

n is an average angular velocity of the satellite, and is obtained through calculation by using a gravitational constant G, earth mass $M_e$, and $\sqrt{a}$ . For example, n satisfies:

$$n = \frac{2\pi}{T} = \sqrt{\frac{GM_e}{(\sqrt{a})^3}}.$$

The terminal apparatus may determine, based on the reference moment and the orbital parameters, coordinates of the non-terrestrial device that runs on the orbit at any moment t.

Optionally, in the NR protocol, the parameters shown in Table 1-2 are carried to the terminal device by using a system information block (system information block, SIB) 19. The SIB 19 may be used to carry satellite configuration information. $t_{0e}$ may be indicated by an epoch time (epochTime) field of NTN configuration (ntn-Config) information in the SIB 19 information, and other parameters in Table 1-2 are indicated by a plane (orbital) field in ephemeris information-release 17 (ephemerisInfo-r17) in the ntn-Config information in the SIB 19.

In addition, if the ephemeris is described in a coordinate system manner (for example, an earth-centered earth-fixed (earth-centered earth-fixed, ECEF) coordinate system), the terminal apparatus may determine the coordinate location of the non-terrestrial device at any moment t based on the reference moment and coordinate system parameters.

The coordinate system parameters may be indicated by a position velocity (positionVelocity) field in the ephemeris information (ephemerisInfo) of the ntn-Config information in the SIB 19 information.

S102: The terminal apparatus determines a repetition pattern based on the ephemeris information and a first correspondence.

In this application, the repetition pattern may indicate information such as a time interval between any two repetitions in K repetitions of the terminal apparatus, where K is a positive integer greater than or equal to 2. In other words, the time interval between any two repetitions is determined based on the ephemeris information and the first correspondence.

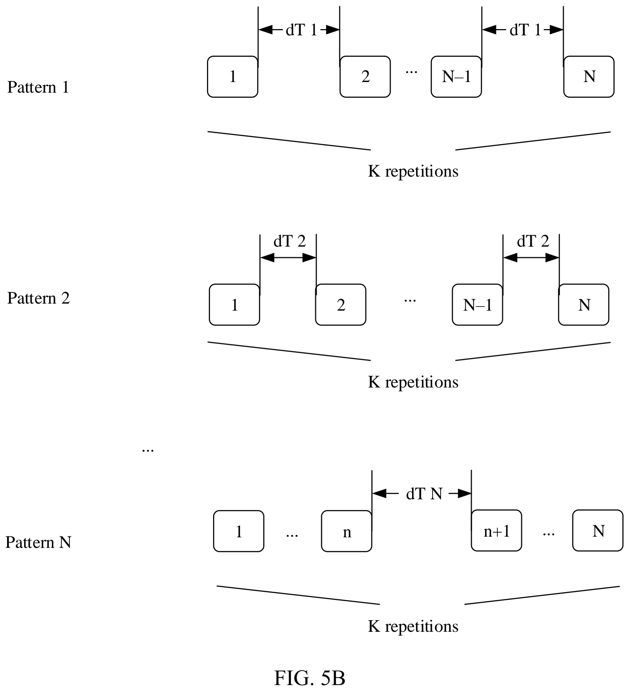

As shown in FIG. 5B, in different repetition patterns, different interval designs are used between transmission resources. For example, each of a repetition pattern 1 to a repetition pattern N includes K repetitions, where transmission intervals between two repetitions in systems corresponding to different repetition patterns may be the same or different. In FIG. 5B, each grid represents one repetition (or referred to as a transmission occasion), and a sequence number in the grid may represent a sequence of the grid in K repetitions.

It can be learned that, in the pattern 1 shown in FIG. 5B, a time interval between any two adjacent repetitions is dT 1, and in the pattern 2 shown in FIG. 5B, a time interval between any two adjacent repetitions is dT 2, and dT 1 is greater than dT 2. In addition, in the pattern N shown in FIG. 5B, a time interval between the $n^{th}$ repetition and the $(n+1)^{th}$ repetition is dT N, where n and N are positive integers, and 1<n<N-1. In addition, a time interval between any two adjacent repetitions in the pattern N may be equal to, greater than, or less than dT N. This may not be specifically limited herein. In other words, the repetition pattern in this application may support repetition at equal intervals, or may support repetition at unequal intervals.

The repetition patterns shown in FIG. 5B may be some or all repetition patterns in a repetition pattern set supported by the terminal apparatus and/or the network device, or may be some or all repetition patterns preconfigured in a repetition pattern set of the terminal apparatus.

Optionally, the terminal apparatus may further receive the first correspondence from a network device. The network device may be a non-terrestrial device, or may be a terrestrial device that supports communication with the terminal apparatus, for example, an access network device or a core network device deployed on the ground. This is not specifically limited.

In addition, the first correspondence in this application may be preconfigured in the terminal apparatus, or may be predefined by using a protocol or the like. For example, the first correspondence is predefined in a factory configuration of the terminal apparatus.

In S102, the terminal apparatus may determine non-terrestrial device information based on the ephemeris information, and further determine the repetition pattern based on the non-terrestrial device information and the first correspondence. The non-terrestrial device information includes distance information and/or moment information. The distance information may indicate a distance between the terminal apparatus that performs uplink transmission and the non-terrestrial device. The moment information may indicate to compensate for a transmission latency of the ephemeris information.

In a possible implementation, when the non-terrestrial device information includes the distance information, correspondingly, the first correspondence may include a correspondence between the distance information and the repetition pattern. In a specific example, the distance information may be a distance or a predicted distance when the terminal apparatus performs transmission with the non-terrestrial device.

In another possible implementation, when the non-terrestrial device information may include the moment information, correspondingly, the first correspondence may include a correspondence between serving beam information, the moment information, and the repetition pattern. For example, the moment information may be determined based on a moment at which the non-terrestrial device sends the ephemeris information, a moment at which the terminal apparatus receives the ephemeris information, and a transmission latency between the non-terrestrial device and the terminal apparatus. The serving beam information may be information about a beam that the current terminal apparatus accesses (or belongs to). The beam information may be a synchronization signal and physical broadcast channel (physical broadcast channel, PBCH) block (synchronization signal and PBCH block, SSB) information (for example, an SSB index) or reference signal port information (for example, an index of a reference signal port). The reference signal is, for example, a demodulation reference signal (demodulation reference signal, DMRS) or a channel state information-reference signal (channel state information-reference signal, CSI-RS).

With reference to Manner 1 and Manner 2, the following separately describes manners in which the terminal apparatus separately determines the repetition pattern based on the first correspondence in the foregoing two implementations. It may be understood that when the non-terrestrial device information includes the distance information and the moment information, for a manner of determining the repetition pattern based on the first correspondence, refer to the implementation. Details are not described again.

Manner 1: When the non-terrestrial device information includes the distance information, the first correspondence may include a correspondence between the distance information and the repetition pattern that is shown in Table 2. The first correspondence may be determined and indicated by the network device to the terminal apparatus.

Table 2

| Distance information: a distance x between the terminal apparatus and the non-terrestrial device | Repetition pattern list |
|---|---|
| Distance level 1 <br> a1<x≤a2 | Repetition pattern 1 |
| Distance level 2 <br> a2<x≤a3 | Repetition pattern 2 |
| ... | ... |

Optionally, in Manner 1, the terminal apparatus may determine a location or a predicted location of the non-terrestrial device based on the ephemeris information, and determine the distance information based on location information of the terminal apparatus and the location or the predicted location of the non-terrestrial device. For example, the location information of the terminal apparatus and the location of the non-terrestrial device may be respectively celestial coordinates of the terminal apparatus and celestial coordinates of the non-terrestrial device. Specifically, the terminal apparatus may determine a moment at which uplink transmission is performed, and determine, based on the ephemeris information, the predicted location of the non-terrestrial device at the moment at which uplink transmission is performed. Therefore, the terminal apparatus may determine, based on the predicted location and the location of the terminal apparatus, the distance between the terminal apparatus and the non-terrestrial device at the moment at which uplink transmission is performed, where the distance may be used as the distance information.

Further, the terminal apparatus may query the first correspondence based on the distance information to determine the repetition pattern. Specifically, the terminal apparatus may query a distance level (or a distance range) within which the distance falls, to use the repetition pattern corresponding to the distance level as the determined repetition pattern. For example, as shown in Table 2, when the terminal apparatus determines that the distance 1 between the terminal apparatus and the non-terrestrial device that performs uplink transmission falls within the distance level 1, the terminal apparatus may determine, based on Table 2, to use the repetition pattern 1. For another example, when the terminal apparatus determines that the distance 2 between the terminal apparatus and the non-terrestrial device that performs uplink transmission falls within the distance level 2, the terminal apparatus may determine, based on Table 2, to use the repetition pattern 2. The distance 1 and the distance 2 respectively represent distances that are predicted by the terminal apparatus at different moments and that are between the terminal apparatus and the non-terrestrial device, or may represent distances between two terminal apparatuses at different locations and a same non-terrestrial device.

For example, any one of the repetition pattern 1 to the repetition pattern N shown in Table 2 may correspond to any repetition pattern shown in FIG. 5B. For example, in some scenarios, the repetition pattern 1 is the pattern 1 shown in FIG. 5B. In some other scenarios, the repetition pattern 1 may alternatively be the pattern 2 or another pattern shown in FIG. 5B. It may be understood that, that any one of the repetition pattern 1 to the repetition pattern N uses a pattern other than the pattern 1 to the pattern N that are shown in FIG. 5B is not limited in this application.

Optionally, the repetition pattern corresponding to the distance information is set based on the distance information. For example, a distance indicated by first distance information falls within a distance level 2, and a distance indicated by second distance information falls within a level 1. Therefore, when the terminal apparatus queries the first correspondence based on the first distance information and the determined repetition pattern is the repetition pattern 2, the terminal apparatus may perform uplink transmission based on the repetition pattern 2. When the terminal apparatus queries the first correspondence based on the second distance information and the determined repetition pattern is the repetition pattern 1, the terminal apparatus may perform uplink transmission based on the repetition pattern 1.

In an example, the repetition patterns may be set, so that a largest interval between adjacent transmission occasions in the repetition pattern 1 is greater than a largest interval between adjacent transmission occasions in the repetition pattern 2.

When FIG. 5B is used, the pattern 1 in FIG. 5B is used as the repetition pattern 1, and the pattern 2 in FIG. 5B is used as the repetition pattern 2. Therefore, dT 1 is the largest interval between the adjacent transmission occasions in the repetition pattern 1, and dT 2 is the largest interval between the adjacent transmission occasions in the repetition pattern 2. dT 1>dT 2 may be set, so that when the distance information corresponds to the distance level 2, the terminal apparatus may use a relatively wide repetition interval, to avoid a failure of the repetition pattern. In addition, for the pattern N shown in FIG. 5B, assuming that a time interval between any two adjacent repetitions other than the $n^{th}$ transmission and the $(n+1)^{th}$ transmission may be less than or equal to dT N, for the pattern N, a largest interval between adjacent transmission occasions is dT N.

In another example, as shown in FIG. 6B, an interval between two adjacent transmission times in K repetitions is denoted as $dT_i = \left\{ \underbrace{\Delta t_1, \cdots, \Delta t_1}_{m}, \Delta t_2, \underbrace{\Delta t_1, \cdots, \Delta t_1}_{m}, \Delta t_2, \cdots, \Delta t_1 \right\}$. It can be learned that there may be two adjacent intervals in this example, which are respectively denoted as $\Delta t_1$ and $\Delta t_2$, where m transmission occasions with intervals $\Delta t_1$ are included between two intervals $\Delta t_2$, m is a positive integer greater than or equal to 1, and m is less than or equal to K. It may be understood that if m=K, $\Delta t_2$ may not exist, and the repetition pattern is a pattern at equal intervals. Alternatively, if $\Delta t_2 = \Delta t_1$, the repetition pattern is a pattern at equal intervals.

Optionally, when a distance between the terminal apparatus and the non-terrestrial device is relatively long, a solution $\Delta t_2 > \Delta t_1$ may be used. When the distance between the terminal apparatus and the non-terrestrial device is relatively short, a solution $\Delta t_2 = \Delta t_1$ or $\Delta t_2 < \Delta t_1$ may be used, to reduce a waste of transmission resources. It may be understood that when $\Delta t_2 > \Delta t_1$, $\Delta t_2$ in the solution shown in FIG. 6B is the largest interval. Therefore, different distance information may correspond to different values of $\Delta t_2$.

In addition, in another example, in K repetitions in any repetition pattern, an interval between two adjacent transmission times is denoted as $dT_i = \{\Delta t_1, \Delta t_2, \cdots, \Delta t_{K-1}\}$, where any two transmission time intervals may be the same or different. Similar to the foregoing example, when the distance between the terminal apparatus and the non-terrestrial device is relatively long, a solution in which the largest interval between adjacent transmission occasions in the repetition pattern is larger may be used. When the distance between the terminal apparatus and the non-terrestrial device is relatively short, a solution in which the largest interval is smaller or not maximum may be used. For example, when each time interval in $\Delta t_1, \Delta t_2, \cdots, \Delta t_{K-1}$ is not the same as another time interval, values of $\Delta t_1, \Delta t_2, \cdots, \Delta t_{K-1}$ are sorted in ascending or descending order of values, that is, values of $\Delta t_1, \Delta t_2, \cdots, \Delta t_{K-1}$ gradually increase or decrease. If a gradually increasing setting manner is used, $\Delta t_{K-1}$ is the largest interval between adjacent transmission occasions in the repetition pattern. If a gradually decreasing setting manner is used, $\Delta t_1$ is the largest interval between adjacent transmission occasions in the repetition pattern. In addition, based on an actual requirement, $\Delta t_1, \Delta t_2, \cdots, \Delta t_{K-1}$ may alternatively be arranged based on values, randomly, or a particular law. This is not specifically limited in this application.

It can be learned that the repetition pattern in this application may use equal intervals or unequal intervals (that is, an interval between at least one pair of adjacent transmission occasions is different from an interval between another pair of adjacent transmission occasions), and the intervals are arranged in a value order, descending order, randomly, or another manner.

Optionally, the repetition patterns may also be set to enable an overall span of repetition in the repetition pattern 1 to be greater than an overall span of repetition in the repetition pattern 2. In this application, the overall span may be a time interval between the first repetition and the $K^{th}$ repetition.

In addition, the repetition patterns may also be set to enable an average interval between repetition in the repetition pattern 1 to be greater than an average interval between repetition in the repetition pattern 2.

Based on the foregoing design, when the distance between the terminal apparatus and the non-terrestrial device is relatively large, a relatively large interval between repetition or a relatively large span between repetition is used, to adapt to impact of a relatively large distance (or path loss) on GF transmission in an NTN, thereby improving GF transmission performance. In addition, when the distance between the terminal apparatus and the non-terrestrial device is relatively small, a relatively small interval between repetition or a relatively small span between repetition may be used, to reduce occupation of GF transmission resources.

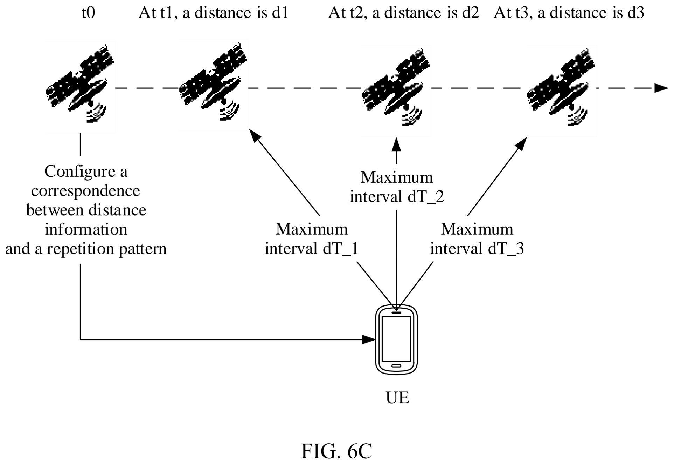

FIG. 6C is used as an example. It is assumed that the repetition patterns in Table 2 include the repetition pattern 1, the repetition pattern 2, the repetition pattern 3, ..., and the repetition pattern N, which respectively correspond to the distance level 1, the distance level 2, the distance level 3, ..., and the distance level N, where distance values in any two distance levels of the distance level 1, the distance level 2, the distance level 3, ..., and the distance level N are different. It can be learned from FIG. 6B that, at a moment t1, the distance between the UE and the non-terrestrial device is d1; at a moment t2, the distance between the UE and the non-terrestrial device is d2; and at a moment t3, the distance between the UE and the non-terrestrial device is d3. Assuming that d1 falls within the distance level 1, d2 falls within the distance level 2, and d3 falls within the distance level 3, at the moment 1, the moment 2, and the moment 3, the terminal apparatus may perform uplink transmission separately by using the repetition pattern 1, the repetition pattern 2, and the repetition pattern 3. In the repetition pattern 1, a maximum time interval between two adjacent repetitions is dT_1, in the repetition pattern 2, a maximum time interval between two adjacent repetitions is dT_2, and in the repetition pattern 3, a maximum time interval between two adjacent repetitions is dT_3. It can be learned from FIG. 6B that d2 is less than d1 and d3. Therefore, the terminal apparatus may use a relatively small interval between repetition when performing uplink transmission at the moment 2, and may use a relatively large interval between repetition at the moment 1 and the moment 3. For example, dT_2<dT_1 and dT_2<dT_3. Optionally, as shown in FIG. 6B, the non-terrestrial device may configure, for the UE at the moment t0, the correspondence between the distance and the repetition pattern shown in Table 2, that is, the first correspondence. Further, optionally, t0 may be earlier than t1.

Optionally, for Manner 1, the terminal apparatus may further report the location information of the terminal apparatus to the non-terrestrial device, so that the non-terrestrial device aligns the repetition pattern. For example, the non-terrestrial device may determine the information about the distance between the terminal apparatus and the non-terrestrial device based on the location information of the non-terrestrial device and the location information of the terminal apparatus, and query the first correspondence based on the distance information to determine the repetition pattern, thereby receiving repetition from the terminal apparatus based on the repetition pattern.

Manner 2: When the non-terrestrial device information includes the moment information, the first correspondence may include a correspondence between the serving beam information, the moment information, and the repetition pattern, as shown in Table 3. The first correspondence may be determined and indicated by the network device to the terminal apparatus. In Manner 2, the moment information may be determined based on an uplink transmission moment of the terminal apparatus and reference moment information.

In a possible implementation, the reference moment information is $t_{0e}$ carried in the ephemeris. For example, the moment information is represented as $t-t_{0e}$. $t$ is a moment at which the terminal apparatus sends an uplink signal to the non-terrestrial device, and may be referred to as the uplink transmission moment. Therefore, the terminal apparatus may determine the moment information based on the uplink transmission moment and $t_{0e}$.

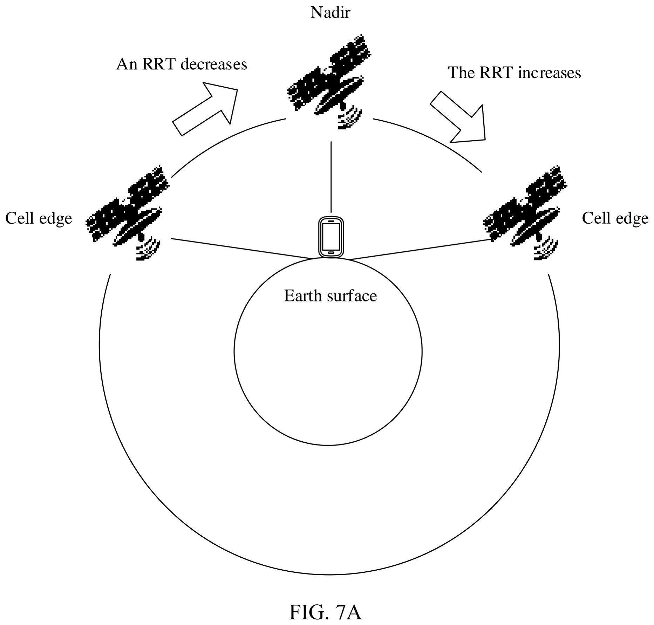

It may be understood that, assuming that the terminal apparatus sends uplink information to the non-terrestrial device at the moment t, the terminal apparatus may use the location of the non-terrestrial device at the moment $t-t_{0e}$ as the predicted location of the non-terrestrial device during uplink transmission at the moment t, to offset impact of a transmission latency on location estimation. Therefore, the first correspondence shown in Table 3 may be queried based on the moment information $t-t_{0e}$, to determine the corresponding repetition pattern. As shown in FIG. 7A, as the satellite moves, when the satellite is located at a nadir (nadir), a round-trip time (round-trip time, RTT) between the terminal apparatus and the satellite is the minimum, and correspondingly, a value of the moment information determined by the terminal apparatus is relatively small. When the satellite moves to a cell edge (cell edge) location, the RRT between the terminal apparatus and the satellite is relatively large, and correspondingly, a value of the moment information determined by the terminal apparatus is relatively large.

For example, in Table 3, an example in which the serving beam information is an identifier of a serving beam is used for description. In actual application, the identifier may be replaced with other information that may indicate a serving beam.

Table 3

| Serving beam identifier (identifier, ID) | Moment information, indicating a satellite reference moment $t-t_{0e}$ on the UE side | GF parameter configuration list |
|---|---|---|
| Beam ID 1 | Moment level 1: $t0<t-t_{0e}\leq t1$ | Configuration 1-1 |
| | Moment level 2: $t1<t-t_{0e}\leq t2$ | Configuration 1-2 |
| | ... | ... |
| | Moment level N: $t(N-1)<t-t_{0e}\leq tN$ | Configuration 1-N |

(continued)

| Serving beam identifier (identifier, ID) | Moment information, indicating a satellite reference moment t-$t_{0e}$ on the UE side | GF parameter configuration list |
|---|---|---|
| Beam ID 2 | Moment level 1: t0'<t-$t_{0e}$≤t1' | Configuration 2-1 |
| | Moment level 2: t1'<t-$t_{0e}$≤t2' | Configuration 2-2 |
| | ... | ... |
| | Moment level N: t(N-1)'<t-$t_{0e}$≤tN' | Configuration 2-N |
| ... | ... | ... |

Values of t0, t1, t2, ..., tN, t0', t1', t2', ..., and tN' are positive real numbers.

As shown in Table 3, when an ID of a serving beam of the terminal apparatus is the ID 1, and a moment value (denoted as a moment 1) indicated by the moment information falls within the moment level (or moment range) 1, the repetition pattern obtained by the terminal apparatus by querying the first correspondence is the configuration 1-1. In addition, when the ID of the serving beam of the terminal apparatus is the ID 2, and the moment value (denoted as a moment 2) indicated by the moment information still falls within the moment level 1, the repetition pattern obtained by the terminal apparatus by querying the first correspondence is the configuration 2-1. The configuration 2-1 and the configuration 1-1 may have partially same or all same parameters, for example, share at least one same GF parameter, or may not include a same parameter. In addition, for a same beam, for example, the beam ID 1, the repetition patterns corresponding to different moment information may be partially the same or all the same, or may be completely different. This is not specifically limited. In addition, for different beam IDs, ranges of the moment level 1 may be the same or different. This is not specifically limited in this application. For example, a moment range of the moment level 1 corresponding to the beam ID 1 is (t0, t1], a moment range of the moment level 1 corresponding to the beam ID 2 is (t0, t1'], and t1 may be equal to t1', or t1 may not be equal to t1'. Optionally, the repetition patterns may alternatively be the same for same beam information and different moment levels. This is not specifically limited in this application.

Optionally, it is assumed that when the satellite is located at two cell edge locations shown in FIG. 7A, the moment information determined by the terminal apparatus is the same. However, when the satellite is located at the two different cell edge locations, serving beams of the terminal apparatus are different. Therefore, different repetition patterns may alternatively be used at the same moment information. In other words, in this application, when the moment information determined by the terminal apparatus is the same, repetition patterns used by the terminal apparatus when the satellite is located at different locations may be distinguished based on the beam information.

Based on this design, different repetition patterns may be used when the moment information between the terminal apparatus and the non-terrestrial device changes, to better adapt to a change of a communication environment between the terminal apparatus and the non-terrestrial device, thereby improving GF transmission performance.

Optionally, a corresponding repetition pattern is set based on the beam information and the moment information. For example, when an ID of a serving beam is the beam ID 1, a moment indicated by first moment information falls within the moment level 2, and a moment indicated by second moment information falls within the moment level 1. Therefore, when the terminal apparatus queries the first correspondence based on the beam ID 1 and the first moment information, the determined repetition pattern is the repetition pattern 2, and the terminal apparatus may perform uplink transmission based on the repetition pattern 2. When the terminal apparatus queries the first correspondence based on the beam ID 1 and the second moment information, the determined repetition pattern is the repetition pattern 1, and the terminal apparatus may perform uplink transmission based on the repetition pattern 1.

In an example, the repetition patterns may be set, so that a largest interval between adjacent transmission occasions in the repetition pattern 1 is greater than a largest interval between adjacent transmission occasions in the repetition pattern 2.

For example, when FIG. 5B is used, the pattern 1 in FIG. 5B is used as the repetition pattern 1, and the pattern 2 in FIG. 5B is used as the repetition pattern 2. Therefore, dT 1 is the largest interval between the adjacent transmission occasions in the repetition pattern 1, and dT 2 is the largest interval between the adjacent transmission occasions in the repetition pattern 2. dT 1>dT 2 may be set, so that when the moment information corresponds to the moment level 1, the terminal apparatus may use a relatively wide repetition interval, to avoid a failure of the repetition pattern.

In another example, as shown in FIG. 6B, an interval between two adjacent transmission times in K repetitions is denoted as $dT_i = \left\{ \underbrace{\Delta t_1, \cdots, \Delta t_1}_{m}, \Delta t_2, \underbrace{\Delta t_1, \cdots, \Delta t_1}_{m}, \Delta t_2, \cdots, \Delta t_1 \right\}$. It can be learned that there may be two adjacent intervals in this example, which are respectively denoted as $\Delta t_1$ and $\Delta t_2$, where m transmission occasions with

intervals $\Delta t_1$ are included between two intervals $\Delta t_2$, m is a positive integer greater than or equal to 1, and m is less than or equal to K. It may be understood that if m=K, $\Delta t_2$ may not exist, and the repetition pattern is a pattern at equal intervals. Alternatively, if $\Delta t_2 = \Delta t_1$, the repetition pattern is a pattern at equal intervals.

Optionally, if a moment indicated by the moment information belongs to a time period in which the satellite is far away from the terminal (or a time level, for example, a time period in which the satellite moves to a location near the cell edge locations shown in FIG. 7A), a solution $\Delta t_2 > \Delta t_1$ may be used. If the moment indicated by the moment information belongs to a time period in which the satellite moves to a location near the nadir (or a time level, for example, a time period in which the satellite moves to the location near the nadir shown in FIG. 7A), a solution $\Delta t_2 = \Delta t_1$ or $\Delta t_2 < \Delta t_1$ may be used, to reduce a waste of transmission resources. It may be understood that when $\Delta t_2 > \Delta t_1$, $\Delta t_2$ in the solution shown in FIG. 6B is the largest interval. Therefore, different distance information may correspond to different values of $\Delta t_2$.

In addition, in another example, in K repetitions in any repetition pattern, an interval between two adjacent transmission times is denoted as $dT_i = \{\Delta t_1, \Delta t_2, \cdots, \Delta t_{K-1}\}$, where any two transmission time intervals may be the same or different. Similar to the foregoing example, if the moment indicated by the moment information belongs to the time period in which the satellite is far away from the terminal, a solution in which the largest interval between adjacent transmission occasions in the repetition pattern is larger may be used. If the moment indicated by the moment information belongs to the time period in which the satellite moves to the location near the nadir, a solution in which the largest interval is smaller or not maximum may be used. For example, when each time interval in $\Delta t_1, \Delta t_2, \cdots, \Delta t_{K-1}$ is not the same as another time interval, values of $\Delta t_1, \Delta t_2, \cdots, \Delta t_{K-1}$ are sorted in ascending or descending order of values, that is, values of $\Delta t_1, \Delta t_2, \cdots, \Delta t_{K-1}$ gradually increase or decrease. If a gradually increasing setting manner is used, $\Delta t_{K-1}$ is the largest interval between adjacent transmission occasions in the repetition pattern. If a gradually decreasing setting manner is used, $\Delta t_1$ is the largest interval between adjacent transmission occasions in the repetition pattern. In addition, based on an actual requirement, $\Delta t_1, \Delta t_2, \cdots, \Delta t_{K-1}$ may alternatively be arranged based on values, randomly, or a particular law. This is not specifically limited in this application.

It can be learned that any repetition pattern in this application may use equal intervals or unequal intervals (that is, an interval between at least one pair of adjacent transmission occasions is different from an interval between another pair of adjacent transmission occasions), and the intervals are arranged in a value order, descending order, randomly, or another manner.

Optionally, the repetition patterns may also be set to enable an overall span of repetition in the repetition pattern 1 to be greater than an overall span of repetition in the repetition pattern 2. In this application, the overall span may be a time interval between the first repetition and the $K^{th}$ repetition.

In addition, the repetition patterns may also be set to enable an average interval between repetition in the repetition pattern 1 to be greater than an average interval between repetition in the repetition pattern 2.

Based on the foregoing design, for a same serving beam, when the moment indicated by the moment information belongs to the time period in which the satellite is far away from the terminal, or the moment indicated by the moment information falls within a relatively large moment level, a relatively large interval between repetition or a relatively large span between repetition may be used, to adapt to impact of a relatively large distance (or path loss) on GF transmission in an NTN, thereby improving GF transmission performance. In addition, when the moment indicated by the moment information belongs to the time period in which the satellite moves to the location near the nadir, or the moment indicated by the moment information falls within a relatively small moment level, a relatively small interval between transmission or a relatively small span between transmission may be used, to reduce occupation of GF transmission resources.

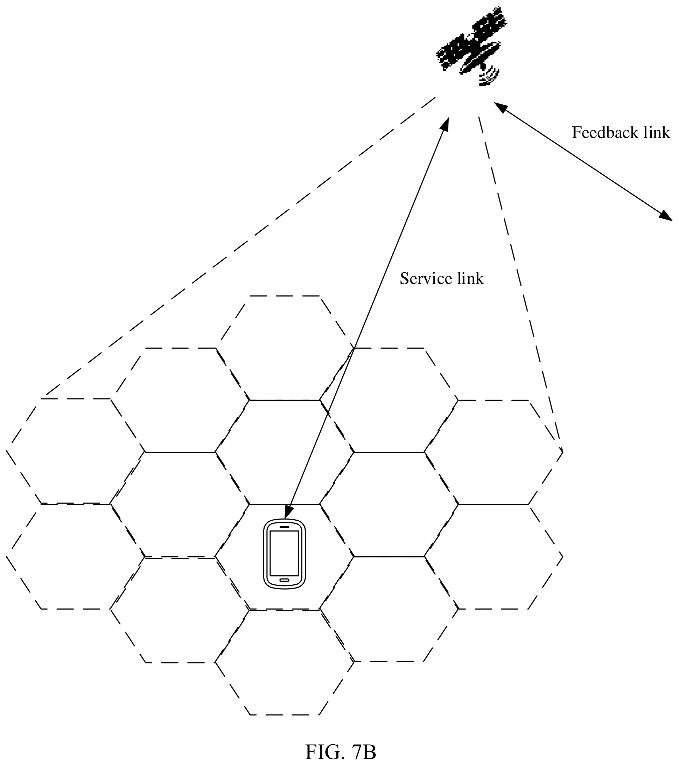

Optionally, for different serving beams, repetition patterns corresponding to a same moment value (or moment level) may be different. The reason lines in that, as in FIG. 7B, different serving beams correspond to different service areas. In FIG. 7B, a hexagonal area represents a service area of one beam. Therefore, at a particular moment, distances (or path losses) between terminal apparatuses in service areas of different serving beams and a same non-terrestrial device are different. Therefore, different repetition patterns need to be set for different serving beams. Setting a corresponding repetition pattern with reference to the serving beam information and the moment information may adapt to a path loss change caused by the beam information and a transmission latency, thereby providing communication performance.

Optionally, in another feasible implementation of Manner 2, the reference moment information is a subframe number $N_0$ of a reference moment, or a universal time coordinated (universal time coordinated, UTC) time corresponding to the reference moment. The terminal apparatus may deduce the UTC time corresponding to the reference moment based on the subframe number $N_0$ of the reference moment. In this implementation, the moment information may be represented as $t-t_0$. $t_0$ may be the UTC time corresponding to $N_0$, and t is the uplink transmission moment of the terminal apparatus. Optionally, $t_0$ may alternatively be carried in the ephemeris information; or $N_0$ may be carried in the ephemeris information, and the terminal apparatus deduces the corresponding UTC time $t_0$ based on $N_0$.

It may be understood that in this implementation, the correspondence shown in Table 3 needs to be replaced with a correspondence between the beam information, $t-t_0$, and the repetition pattern. For a manner of setting the repetition pattern in the first correspondence, refer to the description of Table 3. Details are not described again.

For example, based on the description of Manner 2, in Manner 2, the terminal apparatus may determine the moment information based on the ephemeris information, and query the first correspondence based on the serving beam information and the moment information, to determine the repetition pattern. Specifically, the terminal apparatus may determine a moment at which uplink transmission is performed, determine, based on the ephemeris information, the predicted location of the non-terrestrial device at the moment at which uplink transmission is performed, and determine the moment information based on the predicted location, for example, determine the moment information based on Formula 1, or determine the moment information based on a manner such as querying a table.

Optionally, for Manner 2, the terminal apparatus may further report the location information of the terminal apparatus to the non-terrestrial device, so that the non-terrestrial device aligns the repetition pattern. For example, the non-terrestrial device may determine the moment information based on the location information of the non-terrestrial device and the location information of the terminal apparatus, and query the first correspondence based on the serving beam information and the moment information to determine repetition pattern, thereby receiving the repetition from the terminal apparatus based on the repetition pattern.

S103: The terminal apparatus performs uplink transmission based on the repetition pattern.

Correspondingly, the non-terrestrial device receives the uplink transmission of the terminal apparatus, or the non-terrestrial device transparently transmits the uplink transmission of the terminal apparatus to the terrestrial device. Optionally, the network device may obtain, based on the location information of the terminal apparatus, the repetition pattern synchronized with the terminal apparatus, to improve receiving performance.

It may be understood that S101 to S103 may be applicable to uplink data transmission in the random access process, may be applicable to direct data transmission, or may be applicable to small packet transmission. This is not specifically limited. For uplink data transmission in the random access process, in S103, the terminal apparatus may send uplink data and a random access preamble (namely, a preamble signal) in one message. For direct data transmission, in S103, the terminal apparatus may send uplink data and does not need to send a preamble signal.

It may be understood that, to implement functions in the foregoing embodiments, an embodiment of this application further provides a communication apparatus. The communication apparatus may include corresponding hardware structures and/or software modules for performing various functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

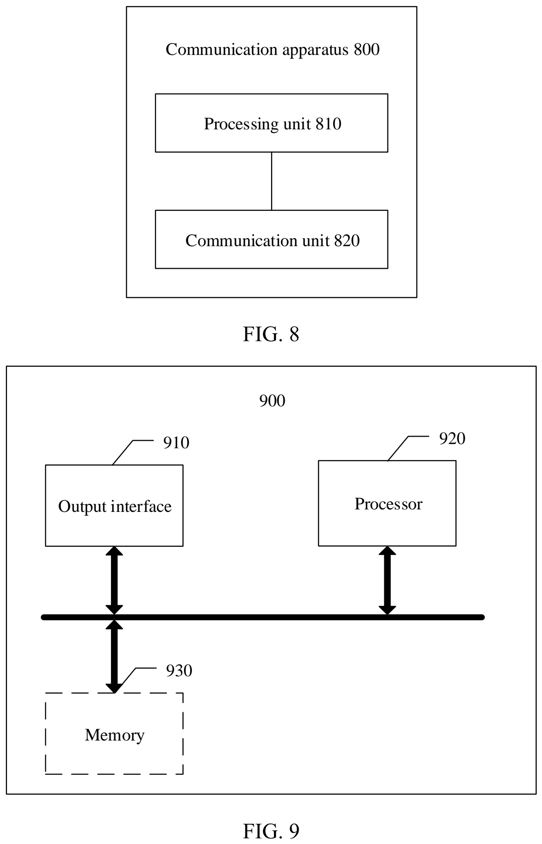

FIG. 8 to FIG. 10 are diagrams of structures of possible communication apparatuses according to embodiments of this application. The communication apparatuses may be configured to implement functions corresponding to the foregoing method embodiment, and therefore can also achieve the beneficial effects of the foregoing method embodiment. In a possible implementation, the communication apparatus may be the network device or the terminal device shown in FIG. 1 or FIG. 2. For related details and effect, refer to the descriptions in the foregoing embodiments.

As shown in FIG. 8, a communication apparatus 800 includes a processing unit 810 and a communication unit 820. The communication unit 820 may alternatively be a transceiver unit, an input/output interface, or the like. The communication apparatus 800 may be configured to implement a function of a transmit end or a receive end in the method embodiment shown in FIG. 5A.

Optionally, when implementing the method shown in FIG. 5A, the processing unit 810 may be configured to: obtain ephemeris information, and determine a repetition pattern based on the ephemeris information and a first correspondence. The communication unit 820 may be configured to perform uplink transmission based on the uplink configuration information.

In a possible implementation, the processing unit 810 may be specifically configured to: determine non-terrestrial device information based on the ephemeris information, where the non-terrestrial device information includes distance information and/or moment information, the distance information indicates a distance between a terminal performing uplink transmission and a non-terrestrial device, the moment information is determined based on uplink transmission moment information and reference moment information, and the reference moment information is included in the ephemeris information; and determine the repetition pattern based on the non-terrestrial device information and the first correspondence.

In a possible implementation, the non-terrestrial device information includes the distance information, and the processing unit 810 may be specifically configured to query the first correspondence based on the distance information, to determine the repetition pattern.

In a possible implementation, the processing unit 810 may be specifically configured to: query the first correspondence based on first distance information to determine a first repetition pattern, and query the first correspondence based on second distance information to determine a second repetition pattern, where a distance indicated by the first distance information is greater than a distance indicated by the second distance information, and a largest interval between adjacent repetition occasions that is indicated by the first repetition pattern is greater than a largest interval between adjacent repetition occasions that is indicated by the second repetition pattern.

In a possible implementation, when the non-terrestrial device information includes the first distance information, the communication unit 820 may be specifically configured to perform uplink transmission based on the first repetition pattern; and when the non-terrestrial device information includes the second distance information, the communication unit 820 may be specifically configured to perform uplink transmission based on the second repetition pattern.

In a possible implementation, the non-terrestrial device information includes the moment information, and the processing unit 810 may be specifically configured to query the first correspondence based on the serving beam information and the moment information, to determine the repetition pattern.

In a possible implementation, the processing unit 810 may be specifically configured to: query the first correspondence based on first serving beam information and first moment information to determine a third repetition pattern, and query the first correspondence based on the first serving beam information and second moment information to determine a fourth repetition pattern, where a moment value corresponding to the first moment information is greater than a moment value corresponding to the second moment information, and a largest interval between adjacent repetition occasions that is indicated by the third repetition pattern is greater than a largest interval between adjacent repetition occasions that is indicated by the fourth repetition pattern.

In a possible implementation, the communication unit 820 may be further configured to receive the first correspondence from a network device.

In a possible implementation, the repetition pattern indicates repetition occasions at unequal intervals.

Division into modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

FIG. 9 shows a communication apparatus 900 provided in an embodiment of this application. The communication apparatus 900 is configured to implement the communication method provided in this application. The communication apparatus 900 may be a communication apparatus that applies the communication method, a component in the communication apparatus, or an apparatus that can be used matching the communication apparatus. The communication apparatus 900 may be a transmit end or a receive end. The communication apparatus 900 may alternatively be a chip system or a chip. In this embodiment of this application, the chip system may include a chip, or may include a chip and another discrete component. The communication apparatus 900 includes at least one processor 920, configured to implement the communication method provided in embodiments of this application. The communication apparatus 900 may further include an output interface 910, and the output interface may also be referred to as an input/output interface. In this embodiment of this application, the output interface 910 may be configured to communicate with another apparatus through a transmission medium, and may include sending and/or receiving functions. For example, when the communication apparatus 900 is a chip, the communication apparatus 900 performs transmission with another chip or component through the output interface 910. The processor 920 may be configured to implement the method shown in the foregoing method embodiment.

For example, the processor 920 may be configured to perform an action performed by the processing unit 810, and the output interface 910 may be configured to perform an action performed by the communication unit 820. Details are not described again.

Optionally, the communication apparatus 900 may further include at least one memory 930, configured to store program instructions and/or data. The memory 930 is coupled to the processor 920. Coupling in this embodiment of this application may be indirect coupling or a communication connection between apparatuses, units, or modules in an electrical form, a mechanical form, or another form, and is used for information exchange between the apparatuses, the units, or the modules. The processor 920 may operate in collaboration with the memory 930. The processor 920 may execute the program instructions stored in the memory 930. At least one of the at least one memory may be integrated with the processor.

In this embodiment of this application, the memory 930 may be a nonvolatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction or a data structure and that can be accessed by a computer, but is not limited thereto. The memory in this embodiment of this application may alternatively be a circuit or any other apparatus that can implement a storage function, and is configured to store program instructions and/or data.

In this embodiment of this application, the processor 920 may be a general-purpose processor, a digital signal processor, an application-specific integrated circuit, a field programmable gate array or another programmable logic device, a discrete gate or transistor logic device, or a discrete hardware component, and may implement or perform the methods, steps, and logic block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware and software modules in the processor.

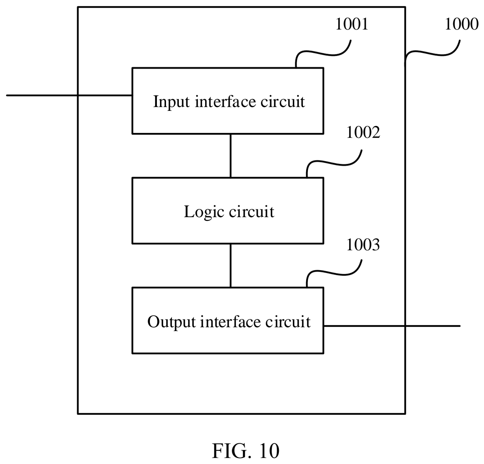

FIG. 10 shows a communication apparatus 1000 provided in an embodiment of this application. The communication apparatus 1000 is configured to implement the communication method provided in this application. The communication apparatus 1000 may be a communication apparatus that applies the communication method shown in embodiments of this application, a component in the communication apparatus, or an apparatus that can be used matching the communication apparatus. The communication apparatus 1000 may be a transmit end or a receive end. The communication apparatus 1000 may be a chip system or a chip. In this embodiment of this application, the chip system may include a chip, or may include a chip and another discrete component. Some or all in the communication methods provided in the foregoing embodiment may be implemented through hardware or software. When hardware is used for implementation, the communication apparatus 1000 may include: an input interface circuit 1001, a logic circuit 1002, and an output interface circuit 1003.

Optionally, using an example in which the apparatus is configured to implement a function of the receive end, the input interface circuit 1001 may be configured to perform the receiving action performed by the communication unit 820, the output interface circuit 1003 may be configured to perform the sending action performed by the communication unit 820, and the logic circuit 1002 may be configured to perform the action performed by the processing unit 1010. Details are not described again.

Optionally, the communication apparatus 1000 may be a chip or an integrated circuit in a specific implementation.

Some or all of operations and functions that are performed by the communication apparatus and that are described in the foregoing method embodiment of this application may be implemented by using the chip or the integrated circuit.

An embodiment of this application provides a computer-readable storage medium, storing a computer program. The computer program includes instructions for implementing the foregoing method embodiment.

An embodiment of this application provides a computer program product including instructions. When the computer program product is run on a computer, the computer is enabled to perform the foregoing method embodiment.

An embodiment of this application provides a communication system. Specifically, the communication system may include a first communication apparatus configured to implement the method shown in FIG. 5A. For details, refer to related descriptions in the foregoing method embodiment. Details are not described herein again. The communication system may include the structure shown in FIG. 1.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that instructions executed by the computer or the processor of the another programmable data processing device generate an apparatus for implementing a specified function in one or more processes in the flowcharts and/or in one or more blocks in the block diagrams.

These computer program instructions may alternatively be stored in a computer-readable memory that can instruct the computer or any other programmable data processing device to work in a specific manner, so that the instructions stored in the computer-readable memory generate an artifact that includes an instruction apparatus. The instruction apparatus implements a specified function in one or more processes in the flowcharts and/or in one or more blocks in the block diagrams.

These computer program instructions may alternatively be loaded onto the computer or the another programmable data processing device, so that a series of operations and steps are performed on the computer or the another programmable device, so that computer-implemented processing is generated. Therefore, the instructions executed on the computer or the another programmable device provide steps for implementing a specified function in one or more processes in the flowcharts and/or in one or more blocks in the block diagrams.

## Claims

1. A communication method, applied to a non-terrestrial network communication system, and comprising:

obtaining ephemeris information;
determining a repetition pattern based on the ephemeris information and a first correspondence; and
performing uplink transmission based on the repetition pattern.

2. The method according to claim 1, wherein determining the repetition pattern based on the ephemeris information and the first correspondence comprises:

determining non-terrestrial device information based on the ephemeris information, wherein the non-terrestrial device information comprises distance information and/or moment information, the distance information indicates a distance between a terminal performing uplink transmission and a non-terrestrial device, the moment information is determined based on uplink transmission moment information and reference moment information, and the reference moment information is comprised in the ephemeris information; and
determining the repetition pattern based on the non-terrestrial device information and the first correspondence.

3. The method according to claim 2, wherein the non-terrestrial device information comprises the distance information, and determining the repetition pattern based on the non-terrestrial device information and the first correspondence comprises:
querying the first correspondence based on the distance information, to determine the repetition pattern.

4. The method according to claim 3, wherein querying the first correspondence based on the distance information, to determine the repetition pattern comprises:

querying the first correspondence based on first distance information to determine a first repetition pattern, and querying the first correspondence based on second distance information to determine a second repetition pattern, wherein
a distance indicated by the first distance information is greater than a distance indicated by the second distance information, and a largest interval between adjacent repetition occasions that is indicated by the first repetition pattern is greater than a largest interval between adjacent repetition occasions that is indicated by the second repetition pattern.

5. The method according to claim 4, wherein performing uplink transmission based on the repetition pattern comprises:

when the non-terrestrial device information comprises the first distance information, performing uplink transmission based on the first repetition pattern; and
when the non-terrestrial device information comprises the second distance information, performing uplink transmission based on the second repetition pattern.

6. The method according to claim 2, wherein the non-terrestrial device information comprises the moment information, and determining the repetition pattern based on the non-terrestrial device information and the first correspondence comprises:
querying the first correspondence based on serving beam information and the moment information, to determine the repetition pattern.

7. The method according to claim 6, wherein querying the first correspondence based on the serving beam information and the moment information, to determine the repetition pattern comprises:

querying the first correspondence based on first serving beam information and first moment information to determine a third repetition pattern, and querying the first correspondence based on the first serving beam information and second moment information to determine a fourth repetition pattern, wherein
a moment value corresponding to the first moment information is greater than a moment value corresponding to the second moment information, and a largest interval between adjacent repetition occasions that is indicated by the third repetition pattern is greater than a largest interval between adjacent repetition occasions that is indicated by the fourth repetition pattern.

8. The method according to any one of claims 2 to 7, wherein the method further comprises:
receiving the first correspondence from a network device.

9. The method according to any one of claims 1 to 8, wherein the repetition pattern indicates repetition occasions at unequal intervals.

10. A communication apparatus, used in a non-terrestrial network communication system, comprising:

a processing unit, configured to obtain ephemeris information; and determine a repetition pattern based on the ephemeris information and a first correspondence; and
an antenna unit, configured to perform uplink transmission based on the repetition pattern.

11. The apparatus according to claim 10, wherein the processing unit is specifically configured to:

determine non-terrestrial device information based on the ephemeris information, wherein the non-terrestrial device information comprises distance information and/or moment information, the distance information indicates a distance between a terminal performing uplink transmission and a non-terrestrial device, the moment information is determined based on uplink transmission moment information and reference moment information, and the reference moment information is comprised in the ephemeris information; and
determine the repetition pattern based on the non-terrestrial device information and the first correspondence.

12. The apparatus according to claim 11, wherein the non-terrestrial device information comprises the distance information, and the processing unit is specifically configured to:
query the first correspondence based on the distance information, to determine the repetition pattern.

13. The apparatus according to claim 12, wherein the processing unit is specifically configured to:

query the first correspondence based on first distance information to determine a first repetition pattern, and query the first correspondence based on second distance information to determine a second repetition pattern, wherein a distance indicated by the first distance information is greater than a distance indicated by the second distance information, and a largest interval between adjacent repetition occasions that is indicated by the first repetition pattern is greater than a largest interval between adjacent repetition occasions that is indicated by the second repetition pattern.

14. The apparatus according to claim 13, wherein the processing unit is specifically configured to:

when the non-terrestrial device information comprises the first distance information, perform uplink transmission based on the first repetition pattern; and
when the non-terrestrial device information comprises the second distance information, perform uplink transmission based on the second repetition pattern.

15. The apparatus according to claim 11, wherein the non-terrestrial device information comprises the moment information, and the processing unit is specifically configured to:
query the first correspondence based on serving beam information and the moment information, to determine the repetition pattern.

16. The apparatus according to claim 15, wherein the processing unit is specifically configured to:

query the first correspondence based on first serving beam information and first moment information to determine a third repetition pattern, and querying the first correspondence based on the first serving beam information and second moment information to determine a fourth repetition pattern, wherein
a moment value corresponding to the first moment information is greater than a moment value corresponding to the second moment information, and a largest interval between adjacent repetition occasions that is indicated by the third repetition pattern is greater than a largest interval between adjacent repetition occasions that is indicated by the fourth repetition pattern.

17. The apparatus according to any one of claims 10 to 16, wherein the communication unit is further configured to:
receive the first correspondence from a network device.

18. The apparatus according to any one of claims 10 to 17, wherein the repetition pattern indicates repetition occasions at unequal intervals.

**19.** A communication apparatus, comprising a processor, wherein when the communication apparatus runs, the processor is configured to execute computer program instructions, so that the communication apparatus performs the method according to any one of claims 1 to 9.

**20.** The apparatus according to claim 19, further comprising a memory and/or a transceiver, wherein the memory is configured to store the computer program instructions.

**21.** A communication apparatus, configured to perform the method according to any one of claims 1 to 9.

**22.** A chip system, wherein the chip system comprises a logic circuit and an input/output interface, wherein the input/output interface is configured to communicate with another communication apparatus other than the chip system, and the logic circuit is configured to perform the method according to any one of claims 1 to 9.

**23.** A computer-readable storage medium, wherein the computer-readable storage medium is configured to store computer program instructions, and when the computer program instructions are run on a computer, the computer is enabled to perform the method according to any one of claims 1 to 9.

**24.** A computer program product, wherein the computer program product comprises computer program instructions, and when the computer program instructions are run on a computer, the computer is enabled to perform the method according to any one of claims 1 to 9.

**25.** A communication system, comprising a sending apparatus and a receiving apparatus, wherein the sending apparatus is configured to perform the method according to any one of claims 1 to 9.

FIG. 1

FIG. 2

CU

CU-CP

RRC

PDCP-C

E1

CU-UP

SDAP

PDCP-U

F1-C

F1-U

RLC

MAC

PHY

DU

FIG. 3

Non-terrestrial
device

Terminal
apparatus

Uplink information

Early termination instruction

...

K repetitions

FIG. 4

S101: Obtain ephemeris information

S102: Determine a repetition pattern based on the ephemeris information and a first correspondence

S103: Perform uplink transmission based on the repetition pattern

FIG. 5A

Pattern 1

dT 1    dT 1

| 1 |    | 2 | ... | N–1 |    | N |

K repetitions

Pattern 2

dT 2    dT 2

| 1 |    | 2 | ... | N–1 |    | N |

K repetitions

...

Pattern N

dT N

| 1 | ... | n |    | n+1 | ... | N |

K repetitions

FIG. 5B

FIG. 6A

FIG. 6B

t0  At t1, a distance is d1  At t2, a distance is d2 At t3, a distance is d3

Configure a
correspondence
between distance
information
and a repetition pattern

Maximum
interval dT_1

Maximum
interval dT_2

Maximum
interval dT_3

UE

FIG. 6C

Nadir

An RRT decreases

The RRT increases

Cell edge

Cell edge

Earth surface

FIG. 7A

Feedback link

Service link

FIG. 7B

Communication apparatus 800

Processing unit 810

Communication unit 820

FIG. 8

900

910

920

Output interface

Processor

930

Memory

FIG. 9

1001    1000

Input interface circuit

1002

Logic circuit

1003

Output interface circuit

FIG. 10

## INTERNATIONAL SEARCH REPORT

| International application No. |
| --- |
| **PCT/CN2023/073909** |

| A. | CLASSIFICATION OF SUBJECT MATTER |
| --- | --- |

H04W 72/21(2023.01)i; H04B 7/185(2006.01)i

According to International Patent Classification (IPC) or to both national classification and IPC

| B. | FIELDS SEARCHED |
| --- | --- |

Minimum documentation searched (classification system followed by classification symbols)

IPC: H04W, H04B

Documentation searched other than minimum documentation to the extent that such documents are included in the fields searched

Electronic data base consulted during the international search (name of data base and, where practicable, search terms used)

CNTXT: WPABS; ENTXTC; DWPI; VEN; CJFD; 3GPP: 卫星, 非地面, 星历, 重复传输, 免动态授权, 距离, 时刻, 波束, 图像, 图样, 图例, 图形, 上传; NTN, non-terrestrial network, ephemeris, repetition, repeated transmission, grant free, GF, distance, time, beam, pattern, uplink

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 114614875 A (SPREADTRUM SEMICONDUCTOR (NANJING) CO., LTD.) 10 June 2022 (2022-06-10) description, paragraphs 38-143, and figures 1-12 | 1-3, 8-12, 17-25 |
| Y | CN 112135348 A (CHINA TELECOM CORPORATION LIMITED) 25 December 2020 (2020-12-25) description, paragraphs 31-65 | 1-3, 8-12, 17-25 |
| A | CN 114424619 A (HUAWEI TECHNOLOGIES CO., LTD.) 29 April 2022 (2022-04-29) entire document | 1-25 |
| A | CN 114142906 A (SPREADTRUM COMMUNICATIONS (SHANGHAI) CO., LTD.) 04 March 2022 (2022-03-04) entire document | 1-25 |
| A | EP 2808702 A1 (O2MICRO INC.) 03 December 2014 (2014-12-03) entire document | 1-25 |
| A | CN 115250503 A (HUAWEI TECHNOLOGIES CO., LTD.) 28 October 2022 (2022-10-28) entire document | 1-25 |

☐ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 October 2023** | **10 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/073909**

| Patent document cited in search report | | | Publication date (day/month/year) | Patent family member(s) | Publication date (day/month/year) |
|---|---|---|---|---|---|
| CN | 114614875 | A | 10 June 2022 | None | |
| CN | 112135348 | A | 25 December 2020 | None | |
| CN | 114424619 | A | 29 April 2022 | None | |
| CN | 114142906 | A | 04 March 2022 | None | |
| EP | 2808702 | A1 | 03 December 2014 | None | |
| CN | 115250503 | A | 28 October 2022 | None | |

Form PCT/ISA/210 (patent family annex) (July 2022)